**Europäisches Patentamt**

**European Patent Office**

**Office européen des brevets**

(19)

(11) Veröffentlichungsnummer: **0 158 722**
**B1**

(12)

# EUROPÄISCHE PATENTSCHRIFT

(45) Veröffentlichungstag der Patentschrift:
**20.07.88**

(21) Anmeldenummer: **84114968.5**

(22) Anmeldetag: **08.12.84**

(51) Int. Cl.⁴: **B 25 J 9/04**, F 16 H 21/04

(54) **Vorrichtung zur Erzeugung von geradlinigen Bewegungen bei Handhabungsgeräten.**

(30) Priorität: **22.03.84 DE 3410515**

(43) Veröffentlichungstag der Anmeldung:
**23.10.85 Patentblatt 85/43**

(45) Bekanntmachung des Hinweises auf die Patenterteilung:
**20.07.88 Patentblatt 88/29**

(84) Benannte Vertragsstaaten:
**AT BE CH DE FR GB IT LI LU NL SE**

(56) Entgegenhaltungen:
**EP-A-0 060 483**
**EP-A-0 128 330**
**CH-A-380 469**
**DE-A-3 317 443**
**GB-A-2 053 145**
**GB-A-2 066 197**

(73) Patentinhaber: **Schwarz, Friedhelm, Hornstrasse 19, D-4390 Gladbeck (DE)**

(72) Erfinder: **Schwarz, Friedhelm, Hornstrasse 19, D-4390 Gladbeck (DE)**

(74) Vertreter: **Radünz, Ingo, Dipl.- Ing., Eduard-Schloemann- Strasse 47, D-4000 Düsseldorf 1 (DE)**

EP 0 158 722 B1

## Beschreibung

Die Erfindung betrifft eine Vorrichtung zur Erzeugung von geradlinigen Bewegungen bei Handhabungsgeräten.

Eine solche Vorrichtung ist der älteren deutschen Patentanmeldung DE-A-3 317 443 (entspricht EP-A-128 330, die einem Stand der Technik nach Art. 54(3), EPÜ, darstellt). Bei dieser Vorrichtung sind die geometrischen Verhältnisse an den Angriffspunkten des Synchronisationsgestänges an den Hebeln der beiden Hebel-Parallelogramme so gewählt, daß eine im Wesentlichen geradlinige Bewegung der Endpunkte des zweiten Hebel-Parallelogramms erreicht wird. Die Vorrichtung enthält einen einzigen Antrieb und ein durch eine Platte gebildetes Zwischenstück für die Kopplung der Hebel-Parallelogramme. Die Vorrichtung kann damit je nach der Aufstellung des Systems entweder nur eine höhenkonstante horizontale oder nur eine geradlinig vertikale Bewegung ermöglichen.

Der Erfindung liegt die Aufgabe zugrunde, eine Vorrichtung zur Erzeugung von geradlinigen Bewegungen bei Handhabungsgeräten derart auszubilden, daß sowohl eine höhenkonstante horizontale als auch eine geradlinig vertikale Bewegung möglich ist.

Diese Aufgabe wird durch die Merkmale des Anspruches 1 gelöst. In den Unteransprüchen sind vorteilhafte Ausgestaltungen der Erfindung angegeben.

Bei dieser Vorrichtung wird über das Synchronisationsgestänge in bekannter Weise eine im wesentlichen höhenkonstante Horizontalbewegung erreicht. Zusätzlich wird eine über den einen Antrieb eingeleitete Hubbewegung auf den Zusatzhebel am ersten Hebel-Parallelogramm und über diesen auf die Umlenkstangen des Zwischenstückes übertragen. Die übertragene Hubbewegung hat eine Schrägstellung des Zwischenstückes zur Folge. Die durch diese Schrägstellung entstehende Differenz in horizontaler Richtung wird gemeinsam durch das Synchronisationsgestänge und das mit dem anderen Antrieb verbundene Ausgleichsgestänge ausgeglichen. Damit entsteht eine im wesentlichen geradlinige vertikale Hubbewegung.

Ein Ausführungsbeispiel der Erfindung ist in der Zeichnung dargestellt und wird im folgenden näher erläutert.

Es zeigen:

Fig. 1    das Schema einer Vorrichtung gemäß der Erfindung und

Fig. 2    die Vorrichtung in einer geänderten Stellung.

Von einem Handhabungsgerät, das einen Manipulator, einen Roboter oder eine Chargiermaschine darstellen kann, ist nur das Knickarmsystem dargestellt. Dieses Knickarmsystem enthält eine Grundplatte 1, die auf dem Handhabungsgerät fest angeordnet ist. Auf der Grundplatte 1 sind schwenkbar die Hebel 2, 3 eines ersten, angetriebenen Hebel-Parallelogrammes 4 angeordnet. Die Enden der Hebel 2, 3 des ersten Hebel-Parallelogrammes 4 sind an einem als Platte ausgebildeten Verteilstück 5 befestigt und um die Drehpunkte 6, 7 schwenkbar.

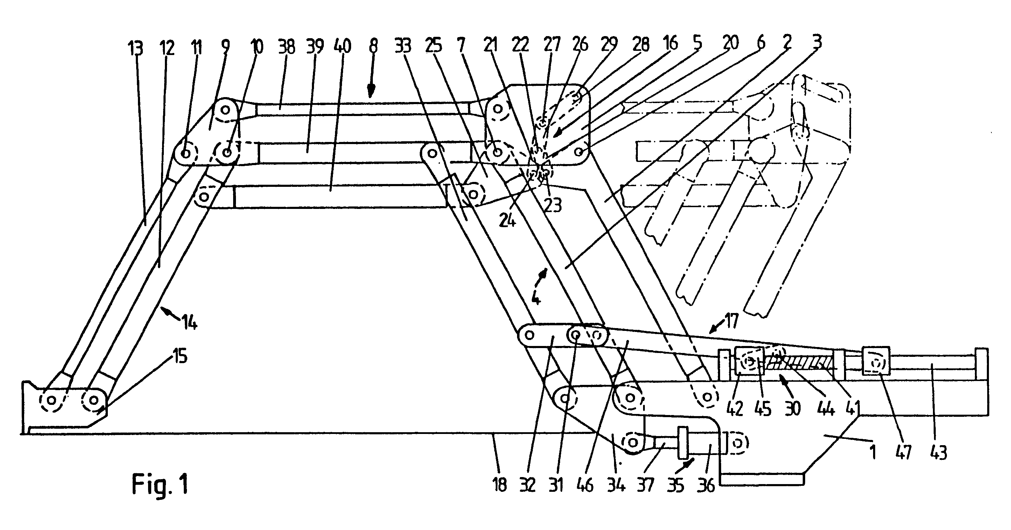

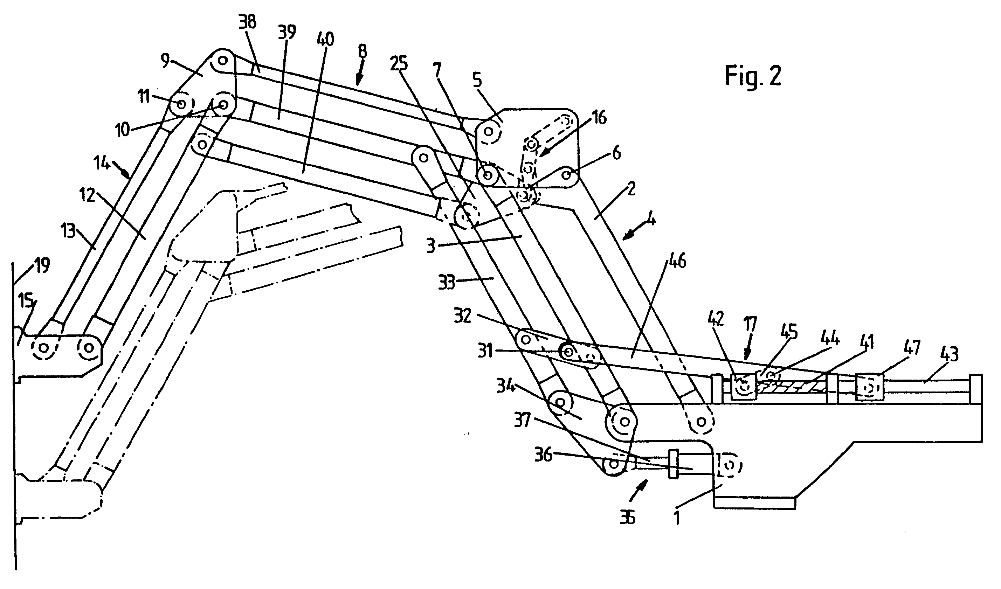

Das Verteilstück 5 ist über ein Zwischenstück 8, das später noch näher beschrieben wird, mit einer weiteren Platte 9 schwenkbar verbunden. An dieser Platte 9 sind in den Drehpunkten 10, 11 die Nebel 12, 13 eines zweiten Hebel-Parallelogrammes 14 gehalten. Die Enden der Hebel 12, 13 des zweiten Hebel-Parallelogrammes 14 sind schwenkbar mit einer Werkzeugplatte 15 verbunden, die beispielsweise einen Greifer trägt. Sowohl dem zweiten Hebel-Parallelogamm 14 als auch dem ersten Hebel-Parallelogramm 4 ist ein weiteres Hebel-Parallelogramm zugeordnet, so daß beide Hebel-Parallelogramme 4, 14 paarweise oder miteinander verbunden vorhanden sind. Über das Zwischenstück 8, ein Synchronisationsgestänge 16 und ein Ausgleichsgestänge 17 wird die Bewegung des ersten Hebel-Parallelogramms 4 auf das zweite Hebel-Parallelogramm 14 übertragen. Die gestrichelten Linien in den Fig. 1 und 2 geben jeweils eine veränderte Stellung des Knickarmsystems wieder, wobei die Grundplatte 1 ortsfest bleibt und die Werkzeugplatte 15 entlang der im wesentlichen höhenkonstanten horizontalen Linien 18 oder der im wesentlichen geraden vertikalen Linie 19 bewegt wird.

Das Synchronisationsgestänge 16 enthält zwei Stangen 20, 21, die nach Art einer Schere über ein Gelenk 22 miteinander verbunden sind. Das freie Ende der einen Stange 20 greift gelenkig in dem Angriffspunkt 23 an den abgewinkelten Teil des einen Hebels 2 des ersten Hebel-Parallelogrammes 4 an, während das freie Ende der anderen Stange 21 gelenkig in dem Angriffspunkt 24 an ein Herzstück 25 angreift. Das Herzstück 25 ist um den Drehpunkt 7 schwenkbar an dem Verteilstück 5 gehalten. Die Angriffspunkte 23, 24 liegen in einem unter sich gleichen Abstand von den Drehpunkten 6, 7 der mit den Stangen 20, 21 verbundenen Elemente (Hebel 2, Herzstück 25).

Die eine Stange 21 ist über das Gelenk 22 hinaus um einen Abschnitt 26 verlängert. Dieser Abschnitt 26 ist über ein weiteres Gelenk 27 mit einer Lasche 28 verbunden, die in einem Drehpunkt 29 schwenkbar an dem Verteilstück 5 befestigt ist. Die Länge der Lasche 28 zwischen dem weiteren Gelenk 27 und dem Drehpunkt 29 entspricht der Entfernung der Angriffspunkte 23, 24 der Stangen 20, 21 von den Drehpunkten 6, 7 des Hebels 2 bzw. des Herzstückes 25. Ferner sind die Abstände zwischen dem Gelenk 22 der Stangen 20, 21 einerseits und dem weiteren Gelenk 27 zwischen dem verlängerten Abschnitt 26 der Stange 21 und der Lasche 28 sowie den Angriffspunkten 23, 24 der Stangen 20, 21 an dem Hebel 2 bzw. dem Herzstück 25 jeweils untereinander gleich.

Bei einer Bewegung des Hebels 2 des ersten Hebel-Parallelogrammes 4 öffnet oder schließt sich die scherenartige Verbindung der Stangen 20, 21, so daß die Angriffspunkte 23, 24 der Stangen 20, 21 sowie das Gelenk 27 zwischen der einen Stange 21 und der Lasche 28 kreisbögenförmige Bewegungen ausführen. Dabei bewegt sich das Gelenk 22 nahezu auf einer neutralen Linie. Aufgrund der angegebenen Ausbildung des aus den Stangen 20, 21 und der Lasche 28 bestehenden Synchronisationsgestänges 16 wird die durch das angetriebene erste Hebel-Parallelogramm 4 eingeleitete Bewegung so über das Verteilstück 5, das Zwischenstück 8, die Platte 9 und damit über das zweite Hebel-Parallelogramm 14 übertragen, daß die Werkzeugplatte 15 eine im wesentlichen höhenkonstante Horizontalbewegung ausführt.

Die Horizontalbewegung wird durch einen Antrieb 30 bewirkt, der auf der Grundplatte 1 angeordnet ist. Der Antrieb 30 ist über das Ausgleichsgestänge 17 mit dem ersten Hebel-Parallelogramm 4 verbunden. Der Angriffspunkt 31 des Ausgleichsgestänges 17 ist auf einer Verbindungslasche 32 vorgesehen, die den Hebel 3 des ersten Hebel-Parallelogramms 4 mit einem Zusatzhebel 33 verbindet. Der Zusatzhebel 33 ist parallel zu den Hebeln 2, 3 des ersten Hebel-Parallelogramms 4 angeordnet und gelenkig mit dem Zwischenstück 8 verbunden.

Ein Ende des Zusatzhebels 33 ist gelenkig an einem Winkelhebel 34 befestigt. Dieser Winkelhebel 34 ist mit der Grundplatte 1 verbunden und schwenkbar um den auf der Grundplatte 1 liegenden Drehpunkt des Hebels 3. An den Winkelhebel 34 greift ein zweiter Antrieb 35 an. Der zweite Antrieb 35 besteht aus einem Hydraulikzylinder 36, dessen Kolbenstange 37 gelenkig mit dem Winkelhebel 34 verbunden ist. Anstelle eines Hydraulikzylinders kann auch ein Spindelantrieb oder ein sonstiger Antrieb verwendet werden.

Das Zwischenstück 8 besteht aus zwei parallel liegenden Umlenkstangen 38, 40 und einer Verbindungsstange 39. Die eine Umlenkstange 38 und die Verbindungsstange 39 verbinden das Verteilstilck 5 und die Platte 9 gelenkig miteinander. An der Verbindungsstange 39 ist das andere Ende des Zusatzhebels 33 gelenkig befestigt. Die zweite Umlenkstange 40 stellt eine gelenkige Verbindung zwischen dem Hebel 12 des zweiten Hebel-Parallelogramms 14 und dem an dem Verteilstück 5 in den Drehpunkt 7 angebrachten Herzstück 25 her.

Der erste Antrieb 30 besteht aus einer angetriebenen Gewindespindel 41, auf der eine Mutter 42 geführt ist oder aus einem sonstigen Linearantrieb. In der Verlängerung der Gewindespindel 41 oder des Linearantriebs ist eine feststehende Gleitstange 43 vorgesehen. Das Ausgleichsgestänge 17, das gleichzeitig als Antriebsgestänge dient, besteht ähnlich dem Synchronisationsgestänge 16 aus zwei in einem Gelenk 44 miteinander verbundenen Stangen 45, 46. Eine der Stangen 45 ist gelenkig mit der Mutter 42 verbunden. Das eine Ende der anderen Stange 46 greift in dem Angriffspunkt 31 an das erste Hebel-Parallelogramm 4 an. Das andere Ende der Stange 46 ist gelenkig mit einem Gleitstein 47 verbunden, der auf der Gleitstange 43 verschiebbar ist.

Bei einer Betätigung des ersten Antriebes 30 werden die Mutter 42 auf der Gewindespindel 41 und der Gleitstein 47 auf der Gleitstange 43 verschoben. Diese axiale Bewegung wird über das Ausgleichs gestänge 17 auf das erste Hebel-Parallelogramm 4 übertragen, wodurch die bereits geschilderte Horizontalbewegung der Werkzeugplatte 15 entlang der Linie 18 (Fig. 1) hervorgerufen wird.

Die Vertikalbewegung erfolgt durch ein Betätigen des zweiten Antriebes 35. Eine Bewegung der Kolbenstange 37 aus der Ruhelage gemäß Fig. 1 ruft gemäß Fig. 2 eine Schrägstellung des Winkelhebels 34 hervor. Die Schrägstellung des Winkelhebels 34 hat eine Anhebung des Zusatzhebels 33 und damit eine Schrästellung der Verbindungsstange 39 und des gesamten Zwischenstückes 8 zur Folge. Das bewirkt über das zweite Hebel-Parallelogramm 14 eine Vertikalbewegung der Werkzeugplatte 15 entlang der Linie 19.

Die bei der Vertikalbewegung der Werkzeugplatte 15 durch die Anhebung des Zusatzhebels 33 und die Schrägstellung der Umlenkstangen 38, 40 sowie der Verbindungsstange 39 des Zwischenstückes 8 und des zweiten Hebel-Parallelogramms 14 entstehende Differenz in horizontal er Richtung wird gemeinsam durch das Synchronisationsgestänge 16 und das Ausgleichsgestänge 17 ausgeglichen. Zu diesem Zweck stehen die auf dem Ausgleichsgestänge 17 gebildeten Abschnitte zwischen dem Gelenk 44 und dem Drehpunkt auf der Mutter 42, zwischen dem Gelenk 44 und dem Angriffspunkt 31 und Zwischen dem Gelenk 44 und dem Drehpunkt auf dem Gleitschein 47 in einem vorgegebenen Verhältnis zueinander. Das Verhältnis ist so gewählt, daß der Angriffspunkt 31 des Ausgleichsgestänges 17 am ersten Hebel-Parallelogramm 4 sich auf einer Vertikalen bewegt.

## Patentansprüche

1. Vorrichtung zur Erzeugung von geradlinigen Bewegungen bei Handhabungsgeräten mit Hilfe zweier hintereinander geschalteter Hebel-Parallelogramme (4, 14), die schwenkbar in einem Zwischenstück (8) gelagert und über ein Synchronisationsgestänge (16) miteinander gekoppelt sind, wobei das Zwischenstück (8) parallele Umlenkstangen (38, 40) und eine Verbindungstange (39) umfaßt, wobei parallel zu dem ersten Hebel-Parallelogramm (4) ein Zusatzhebel (33) angeordnet und mit diesem gekoppelt ist, wobei an den Zusatzhebel (33) schwenkbar zwei Antriebe (30, 35) angreifen, die auf einer das erste Hebel-Parallelogramm (4) tragenden Grundplatte (1) angeordnet sind und zwischen dem ersten Antrieb (30) und dem Zusatzhebel (33) ein Ausgleichsgestänge (17) vorgesehen ist, das aus zwei gelenkig miteinander verbundenen Stangen (45, 46) besteht, von denen eine mit dem Verstellglied des ersten Antriebes (30) verbunden und die andere an dem von dem Zusatzhebel (33) wegweisenden Ende gleitend geführt ist.

2. Vorrichtung nach Anspruch 1, dadurch gekennzeichnet, daß die Länge der durch die Angriffs- und Drehpunkte gebildeten Abschnitte des Ausgleichsgestänges (17) in einem vorgegebenen Verhältnis zueinander stehen, und zwar derart, daß der Angriffspunkt (31) das Ausgleichsgestanges (17) an dem Hebel-Parallelogramm (4) während der Hubbewegung geradlinig geführt ist.

3. Vorrichtung nach Anspruch 1 oder 2, dadurch gekennzeichnet, daß die Enden jedes der beiden Hebel-Parallelogramme (4, 14) in je einer Platte (5, 9) gelagert sind, daß die beiden Platten (5, 9) durch eine der Umlenkstangen (38) und die Verbindungsstange (39) gelenkig verbunden sind, daß an die Verbindungsstange (39) der Zusatzhebel (33) des ersten Hebel-Parallelogramms (4) angreift, daß das eine Ende der zweiten Umlenkstange (40) an einen der Hebel (12) des zweiten Hebel-Parallelogramms (14) und das andere Ende der zweiten Umlenkstange (40) an ein Herzstück (25) angreifen, daß schwenkbar an der dem ersten Hebel-Parallelogramm (4) zugeordneten Platte (5) das Synchronisationsgestänge (16) vorgesehen ist, dessen eine Stange (21) mit dem Herzstück (25) und dessen andere Stange (20) mit dem abgewinkelten Teil eines der Hebel (2) des ersten Hebel-Parallelogramms (4) gelenkig verbunden ist.

## Claims

1. Device for the generation of rectilinear movements in manipulator devices with the aid of two lever parallelograms (4, 14), which are connected one behind the other, pivotably borne in an intermediate member (8) and coupled one with the other by way of a synchronising linkage (16), wherein the intermediate member (8) comprises parallel deflecting rods (38, 40) and a connecting rod (39), wherein an additional lever (33) is arranged parallelly to the first lever parallelogram (4) and coupled with this, wherein two drives (30, 35), which are arranged on a base plate (10) carrying the first lever parallelogram (4), engage pivotably at the additional lever (33) and a compensating linkage (17) is arranged between the first drive (30) and the additional lever (33) and consists of two rods (45, 46), which are each articulatedly connected with the other and of which the one is connected with the displacing member of the first drive (30) and the other is slidingly guided at the end remote from the additional lever (33).

2. Device according to claim 1, characterised thereby, that the length of those portions of the compensating linkage (17), which are formed by the points of engagement and rotation, stand in a predetermined ratio one to the other and namely in such a manner that the engagement point (31) of the compensating linkage (17) is rectilinearly guided at the lever parallelogram (4) during the stroke movement.

3. Device according to claim 1 or 2, characterised thereby, that the ends of each of both the lever parallelograms (4, 14) are each borne in a respective plate (5, 9), that both the plates (5, 9) are articulatedly connected through one of the deflecting rods (38) and the connecting rod (39), that the additional lever (33) of the first lever parallelogram (4) engages at the connecting rod (39), that the one end of the second eflecting rod (40) engages at one of the levers (12) of the second lever parallelogram (40) and the other end of the second deflecting rod (40) engages at a frog (25), which is provided to be pivotable at the plate (5), associated with the first lever parallelogram (4), of the synchronising linkage (16), the one rod (21) of which is articulatedly connected with the frog (25) and the other rod (20) of which is articulatedly connected with the angled part of one of the levers (2) of the first lever parallelogram (4).

## Revendications

1. Dispositif destiné à produire des mouvements rectilignes sur les engins de manutention à l'aide de deux parallélogrammes de leviers (4, 14) montés l'un après l'autre lesquels sont fixés de manière pivotante sur une pièce intermédiaire (8) et accouplés mutuellement par une tringlerie de synchronisation (16), tandis que ladite pièce intermédiaire (8) comprend des tiges de renvoi (38, 40) et une barre d'accouplement (39), un levier complémentaire (33) étant disposé parallèlement au premier parallélogramme et accouplé à celui-ci, deux entraînements (30, 35) s'appliquant de manière pivotante au levier complémentaire (33), ces entraînements étant disposés sur une plaque de base (1) supportant le premier parallélogramme (4) et une tringlerie de compensation (17) étant prévue entre le premier entraînement (30) et le levier complémentaire (33), cette tringlerie étant constituée de deux tiges articulées l'une sur l'autre dont l'une est reliée à l'élément de déplacement du premier entraînement (30) et l'autre guidée de manière coulissante sur l'extrémité directrice du levier complémentaire (33).

2. Dispositif selon la revendication 1, caractérisé par le fait que les longueurs des sections de la tringlerie (17) formées par les points d'application de la force et de rotation sont situées dans un rapport mutuel prédéterminé à savoir de telle sorte que, pendant le mouvement de levage, le point de prise (31) de la tringlerie (17) sur le parallélogramme se déplace en ligne droite.

3. Dispositif selon la revendication 1 ou 2, caractérisé par le fait que les extrémités de chacun des deux parallélogrammes (4, 14) sont fixées respectivement dans une plaque (5, 9), par le fait que les deux plaques (5, 9) sont reliées de manière articulée par l'une des tiges de renvoi (38) et la barre d'accouplement (39), par le fait que le levier complémentaire (38) du premier parallélogramme (4) vient en prise avec la barre d'accouplement (39), par le fait qu'une extrémité de la deuxième tige de renvoi (40) est fixée à l'un des leviers (12) du deuxième parallélogramme (14) et l'autre extrémité de la deuxième tige de renvoi (40) est fixée à une pièce triangulaire (25), car, sur la plaque (5) associée au premier parallélogramme (4) est fixée de manière pivotante la tringlerie de synchronisation (16) dont une tige (21) est articulée sur la pièce triangulaire (25) et dont l'autre tige (20) est articulée sur la pièce coudée de l'un des leviers (2) du premier parallélogramme (4).

Fig. 1

0 158 722

Fig. 2